# EUROPÄISCHE PATENTSCHRIFT

(11) **EP 0 849 696 B1**
(45) Veröffentlichungstag und Bekanntmachung des Hinweises auf die Patenterteilung: **02.06.1999**
(21) Anmeldenummer: 97121736.9
(22) Anmeldetag: 10.12.1997
(51) Int. Cl.: G06K 7/00

(54) **Kartenlesevorrichtung**
Chip card reader
Lecteur de cartes a puce

(30) Priorität: 22.12.1996 DE 19653412
(43) Veröffentlichungstag der Anmeldung: 24.06.1998
(73) Patentinhaber: ddm hopt + schuler GmbH & Co. KG., D-78628 Rottweil (DE)
(72) Erfinder: Rapp, Hans-Jochen, 78628 Rottweil (DE); Storz, Michael,Dipl.-Ing., 78467 Konstanz (DE); Burkhart, Ewald, 78628 Rottweil (DE)
(74) Vertreter: KOHLER SCHMID + PARTNER

(56) Entgegenhaltungen:
- WO-A-96/00951
- US-A- 4 999 601

## Beschreibung

Die Erfindung betrifft eine Kartenlesevorrichtung für Karten, auf denen Informationen auslesbar und/oder speicherbar sind, insbesondere für Chipkarten, mit einer Sensoreinrichtung, die zwischen einer Einführöffnung für die Karte und einer Lese- und/oder Schreibeinrichtung nahe der Kartenbahn angeordnet ist, wobei die Sensoreinrichtung zwei quer zur Einführrichtung der Karte verlaufende elektrisch leitende Streifen aufweist.

Eine derartige Kartenlesevorrichtung ist z.B. aus der WO 96/00951 bekanntgeworden.

Sogenannte Chipkarten weisen einen integrierten Schaltkreis (Chip) auf, der mit entsprechenden Kontaktflächen auf der Kartenoberfläche verbunden ist. Eine solche Chipkarte wird über eine Einführöffnung in eine Kartenlesevorrichtung eingeschoben, bis die Kontaktflächen kontaktiert werden können und mit Hilfe einer Lese- oder Schreibeinrichtung die auf dem Chip gespeicherten Informationen abgerufen cder geändert werden können.

Da dieser Informationsaustausch sehr schnell erfolgt, braucht die Chipkarte meist nur bis an einen Anschlag eingeschoben zu werden und kann dann ohne Verzögerung wieder entnommen werden. Auf mechanische Verriegelungen, die die Einführöffnung, wenn die Karte vollständig in die Kartenlesevorrichtung eingeführt ist, verschließen, wird heutzutage meist verzichtet. Deshalb sollte die Kartenlesevorrichtung mit einer Sensoreinrichtung versehen sein, die erkennt, ob eine manipulierte Chipkarte zum Manipulieren der ausgetauschten Informationen in die Kartenlesevorrichtung eingeführt ist. Beispielsweise kann eine manipulierte Karte mit dünnen Drähten, welche mit den Kontaktflächen der Chipkarte verbunden sind, in die Kartenlesevorrichtung eingeführt werden, so daß die ausgetauschten Informationen über diese Drähte von außen manipuliert werden können.

Um eine derartige Manipulation zu erkennen, ist aus der EP 0 468 848 A1 eine Sensoreinrichtung bekannt, bei der ein abgestimmter Meßfühler zum Nachweis eines elektromagnetischen Feldes nahe der Kartenbahn vorgesehen ist. Mit Hilfe dieses Meßfühlers können am Meßfühler vorbeigeführte, stromführende Drähte erkannt werden. Z.B. führt ein für den Informationsaustausch erforderliches Taktsignal (Clock-Signal) der Lese- oder Schreibeinrichtung zu einem die Drähte umgebenden elektromagnetischen Wechselfeld, welches mit Hilfe des Meßfühlers nachweisbar ist.

Wenn die an die Kontaktflächen angeschlossenen Drähte jedoch abgeschirmt sind, z.B. indem die Drähte von einer auf der Karte angebrachten Metallschicht (Metallblech) abgeschirmt sind, können die elektromagnetischen Felder der Drähte von dem Meßfühler nicht oder nur unzureichend erkannt werden.

Die eingangs genannte WO 96/00951 beschreibt einen Kartenleser mit einer Sensoreinrichtung, die zwei quer zur Einführrichtung der Karte verlaufende elektrisch leitende Streifen aufweist. Ein Testsignal wird an den Kartenkontakten angelegt und beim Vorhandensein von Metalldrähten kann das Testsignal von der Sensoreinrichtung durch elektromagnetische Kopplung detektiert werden. Dadurch können Drähte zum Manipulieren des Kartenlesers detektiert werden.

Der vorliegenden Erfindung liegt demgegenüber die Aufgabe zugrunde, eine Kartenlesevorrichtung der eingangs genannten Art dahin gehend weiterzubilden, daß Manipulationen am Kartenleser auch dann bereits zuverlässig erkannt werden können, wenn die Karte ihre Leseposition noch nicht erreicht hat.

Diese Erfindung wird erfindungsgemäß dadurch gelöst, daß die zwei Streifen elektromagnetisch koppelbar auf der gleichen Kartenseite nebeneinander, insbesondere parallel zueinander, verlaufen und daß der eine Streifen an einen HF(Hochfrequenz)-Generator und der andere Steifen an eine Meßeinrichtung angeschlossen sind.

Diese erfindungsgemäße Kartenlesevorrichtung, die in Anspruch 1 definiert ist, hat damit den wesentlichen Vorteil, daß mit Hilfe der mindestens zwei Streifen die Stärke ihrer elektromagnetische Kopplung gemessen werden kann. Diese Kopplungsstärke ändert sich bei Anwesenheit von Metall. Wenn sich kein Metall nahe den zwei Streifen befindet, ergibt sich eine normale Kopplungsstärke. Diese normale Kopplungsstärke erhöht sich bzw. nimmt ab, wenn sich ein nicht geerdetes Metall bzw. ein geerdetes Metall nahe den zwei Streifen befindet. Die Sensoreinrichtung verläuft vorzugsweise rechtwinklig zur Einführrichtung der Karte und über die gesamte Kartenbreite, um jeden durch die Einführöffnung eingeführten Draht oder metallische Abschirmbleche zu erkennen. Außerdem können sich die zwei Streifen in der Kartenlesevorrichtung auch nahe der beiden Längskanten einer Karte in Einführrichtung erstrecken, um auch an der Längskante einer Karte verlaufende Manipulationsdrähte erkennen zu können.

Bei einer besonders bevorzugten Ausführungsform ist neben den zwei Streifen ein dritter elektrisch leitender Streifen angeordnet, der z.B. als kapazitiver Sensor nicht abgeschirmte, einzelne Drähte aufgrund der von ihnen abgestrahlten elektromagnetischen Felder erkennen kann.

Damit dieser dritte Streifen die Meßsignale der zwei Streifen nicht beeinträchtigt, verläuft in einer vorteilhaften Weiterbildung dieser Ausführungsform zwischen dem dritten Streifen und den zwei Streifen ein geerdeter vierter Streifen. Dieser vierte Streifen dient der elektrischen Abschirmung der zwei Streifen gegenüber dem dritten Streifen.

Die Sensoreinrichtung kann besonders einfach und kostengünstig hergestellt werden, wenn alle Streifen auf einer Platine, insbesondere auf einer flexiblen Platinenfolie, angeordnet sind.

Um zu einem definierten Zeitpunkt ein Signal der Sensoreinrichtung zu erzeugen, startet in bevorzugten Ausführungsformen ein durch das Einführen der Karte betätigbarer Schalter die Signalaufnahme durch die Sensoreinrichtung.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fig. 1: eine schematische Ansicht einer Kartenlesevorrichtung mit einer Sensoreinrichtung; und
- Fig. 2: eine Draufsicht auf die als Folienplatine ausgebildete Sensoreinrichtung.

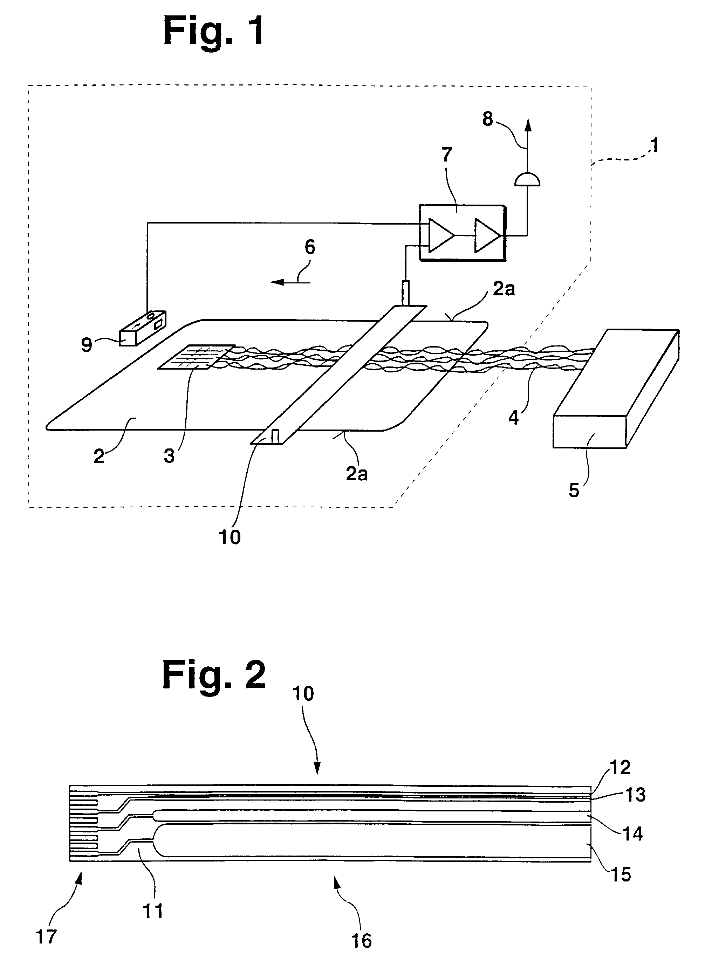

In Fig. 1 sind die wesentlichen Teile einer Kartenlesevorrichtung 1 dargestellt. In diese Kartenlesevorrichtung 1 kann eine Chipkarte 2 bis in eine Position eingeschoben werden, in der Kontaktflächen 3 auf der Chipkarte 2 kontaktiert sind und ein Informationsaustausch über diese Kontaktfläche 3 mit dem Chip und einer Lese- oder Schreibeinrichtung (nicht dargestellt) stattfinden kann.

In Fig. 1 ist eine manipulierte Chipkarte 2 dargestellt, deren Kontaktflächen 3 mit dünnen Drähten 4 verbunden und zu einer externen Manipulationselektronik 5 außerhalb der Kartenlesevorrichtung 1 herausgeführt sind. Um eine derartige Manipulation erkennen zu können, ist über mindestens einer, vorzugsweise über beiden Seiten der Chipkarte 2 eine als Sensorstreifen ausgebildete Sensoreinrichtung 10 rechtwinklig zur Einführrichtung 6 und über die gesamte Breite der Chipkarte 2 angeordnet. Die Signale der Sensoreinrichtung 10 werden in einem zweistufigen Transistorverstärker 7 verstärkt und als Ausgangssignal 8 ausgegeben. Über einen Schalter 9, den die Chipkarte 2 beim Einreichen ihrer Lese-/Schreibposition betätigt, wird die Signalaufnahme durch die Sensoreinrichtung 10 gestartet.

Fig. 2 zeigt die Sensoreinrichtung 10, die als flexibler Sensorstreifen ausgebildet ist. Auf einer elektrisch nicht leitenden Platinenfolie 11 sind im Ausführungsbeispiel vier elektrisch leitende Streifen 12, 13, 14, 15 aus Kupfer vorgesehen, die in einem Sensorbereich 16 parallel zueinander verlaufen und über einen Kontaktbereich 17 kontaktierbar sind.

Mit Hilfe der mindestens zwei Streifen 12, 13 kann die Stärke ihrer elektromagnetische Kopplung gemessen werden. Dazu wird in einen der zwei Streifen, z.B. 12, ein in einem HF-Genearator (nicht gezeigt) erzeugtes HF-Signal eingespeist, und das in den zweiten Streifen 13 induzierte und im dem Verstärker 7 verstärkte Signal gemessen. Die Kopplungsstärke ändert sich bei Anwesenheit von Metall, z.B. eines die Drähte 4 abschirmenden Metallblechs. Wenn sich kein Metall nahe den zwei Streifen 12, 13 befindet, ergibt sich eine normale Kopplungsstärke. Diese normale Kopplungsstärke erhöht sich bzw. nimmt ab, wenn sich ein nicht geerdetes Metall bzw. ein geerdetes Metall nahe den zwei Streifen 12, 13 befindet. Die Sensoreinrichtung 10 verläuft rechtwinklig zur Einführrichtung 6 der Chipkarte 2 und über die gesamte Kartenbreite, um jeden durch die Einführöffnung eingeführten Draht 4 oder ein metallisches Abschirmblech zu detektieren. Die Sensoreinrichtung kann sich zusätzlich auch noch entlang der beiden Längskanten 2a der Chipkarte 2 in der Kartenlesevorrichtung 1 erstrecken, um auch an der Längskante 2a verlaufende Manipulationsdrähte 4 sicher nachweisen zu können.

Der etwas breitere Streifen 14 ist geerdet und schirmt so den breiten Streifen 15 gegenüber den zwei Streifen 12 und 13 ab. Dieser breite Streifen 15 ist ein kapazitiver Meßfühler, der z.B. nicht abgeschirmte, einzelne Drähte 4 aufgrund der von ihnen abgestrahlten elektromagnetischen Felder erkennen kann.

## Patentansprüche

1. Kartenlesevorrichtung (1) für Karten, auf denen Informationen auslesbar und/oder speicherbar sind, insbesondere für Chipkarten (2), mit einer Sensoreinrichtung (10), die zwischen einer Einführöffnung für die Karte (2) und einer Lese- und/oder Schreibeinrichtung nahe der Kartenbahn angeordnet ist, wobei die Sensoreinrichtung (10) zwei quer zur Einführrichtung (6) der Karte (2) verlaufende elektrisch leitende Streifen (12, 13) aufweist,
dadurch gekennzeichnet,
daß die zwei Streifen (12, 13) elektromagnetisch koppelbar auf der gleichen Kartenseite nebeneinander, insbesondere parallel zueinander, verlaufen und daß der eine Streifen (12; 13) an einen HF-Generator und der andere Streifen (13; 12) an eine Meßeinrichtung angeschlossen sind.

2. Kartenlesevorrichtung nach Anspruch 1, dadurch gekennzeichnet, daß neben den zwei Streifen (12, 13) ein dritter elektrisch leitender Streifen (15) angeordnet ist.

3. Kartenlesevorrichtung nach Anspruch 2, dadurch gekennzeichnet, daß zwischen dem dritten Streifen (15) und den zwei Streifen (12, 13) ein geerdeter vierter Streifen (14) verläuft.

4. Kartenlesevorrichtung nach einem der vorhergehenden An sprüche, dadurch gekennzeichnet, daß alle Streifen (12, 13, 14, 15) auf einer Platine, insbesondere auf einer flexiblen Platinenfolie (11), angeordnet sind.

5. Kartenlesevorrichtung nach einem der vorhergehenden Ansprüche, dadurch gekennzeichnet, daß ein durch das Einführen der Karte (2) betätigbarer Schalter (9) die Signalaufnahme durch die Sensoreinrichtung (10) startet.

## Claims

1. Card reading device (1) for cards upon which information can be read out and/or stored, in particular for chip cards (2), having a sensor device (10) disposed proximate the card path between an insertion opening for the card (2) and a reading and/or writing device, wherein the sensor device (10) has two electrically conducting strips (12, 13) extending transverse to the insertion direction (6) of the card (2),
characterized in that
the two strips (12, 13) extend next to each other, in particular parallel to each other, at the same side of the card in a manner allowing electromagnetic coupling, wherein one strip (12; 13) is connected to an RF-generator and the other strip (13; 12) to a measuring device.

2. Card reading device according to claim 1,
characterized in that a third electrically conducting strip (15) is disposed next to the two strips (12, 13).

3. Card reading device according to claim 2,
characterized in that a grounded fourth strip (14) extends between the third strip (15) and the two strips (12, 13).

4. Card reading device according to any one of the preceding claims, characterized in that all strips (12, 13, 14, 15) are disposed on a sheet, in particular on a flexible sheet (11).

5. Card reading device according to any one of the preceding claims, characterized in that a switch (9), which can be operated by introduction of the card (2) initiates signal reception by the sensor device (10).

## Revendications

1. Dispositif de lecture de cartes (1) pour des cartes sur lesquelles des informations peuvent être lues et/ou mémorisées, en particulier pour cartes à puce (2), équipé d'un capteur (10), qui est disposé entre une ouverture d'introduction de la carte (2) et d'un dispositif de lecture et/ou d'écriture près de la piste de la carte, le capteur (10) présentant deux bandes (12, 13) électriquement conductrices s'étendant perpendiculairement à la direction d'introduction (6) de la carte (2),
caractérisé en ce que
les deux bandes (12, 13) pouvant être couplées électromagnétiquement s'étendent juxtaposées, en particulier parallèles entre elles, sur le même côté de la carte, et en ce qu'une bande (12 ; 13) est reliée à un générateur HF et l'autre bande (13 ; 12) est reliée à un dispositif de mesure.

2. Dispositif de lecture de cartes selon la revendication 1, caractérisé en ce qu'à côté des deux bandes (12, 13) est disposée une troisième bande (15) électriquement conductrice.

3. Dispositif de lecture de cartes selon la revendication 2, caractérisé en ce qu'entre la troisième bande (15) et les deux bandes (12, 13) s'étend une quatrième bande (14) reliée à la masse.

4. Dispositif de lecture de cartes selon l'une quelconque des revendications précédentes, caractérisé en ce que toutes les bandes (12, 13, 14, 15) sont disposées sur une platine, en particulier sur une feuille de platine flexible (11).

5. Dispositif de lecture de cartes selon l'une quelconque des revendications précédentes, caractérisé en ce qu'un commutateur (9) actionnable par l'introduction de la carte (2) déclenche la réception de signaux par le capteur (10).
